(19) Europäisches Patentamt / European Patent Office / Office européen des brevets

(11) **EP 4 170 892 B1**

(12) **FASCICULE DE BREVET EUROPEEN**

(45) Date de publication et mention de la délivrance du brevet:
**31.07.2024 Bulletin 2024/31**

(21) Numéro de dépôt: **22201440.9**

(22) Date de dépôt: **13.10.2022**

(51) Classification Internationale des Brevets (IPC):
**H02P 6/24** *(2006.01)*

(52) Classification Coopérative des Brevets (CPC):
**H02P 6/24**

(54) **DISPOSITIF ET PROCÉDÉ D'OPTIMISATION DE LA CONSOMMATION ÉLECTRIQUE D'UN MOTEUR SANS BALAI À COURANT CONTINU**

VORRICHTUNG UND VERFAHREN ZUR OPTIMIERUNG DES STROMVERBRAUCHS EINES BÜRSTENLOSEN GLEICHSTROMMOTORS

DEVICE AND METHOD FOR OPTIMISING THE POWER CONSUMPTION OF A BRUSHLESS DC MOTOR

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **14.10.2021 FR 2110930**

(43) Date de publication de la demande:
**26.04.2023 Bulletin 2023/17**

(73) Titulaire: **Delta Dore**
**35270 Bonnemain (FR)**

(72) Inventeurs:
• **PIHUIT, Jean-Philippe**
**35270 BONNEMAIN (FR)**
• **CHABANNES, André**
**35270 BONNEMAIN (FR)**
• **SCHRAEN, Maxime**
**35270 BONNEMAIN (FR)**

(74) Mandataire: **Cabinet Le Guen Maillet**
**3, impasse de la Vigie**
**CS 71840**
**35418 Saint-Malo Cedex (FR)**

(56) Documents cités:
EP-A1- 1 686 683      WO-A1-2016/177736
FR-A1- 3 104 190

## Description

DOMAINE TECHNIQUE

La présente invention concerne le domaine des moteurs à courant continu sans balai et concerne plus particulièrement un procédé destiné à optimiser la consommation en énergie électrique d'un moteur sans balai à courant continu.

ETAT DE LA TECHNIQUE ANTERIEURE

Les moteurs à courant continu sans balai ou moteurs BLDC (pour « brushless direct current » en anglais) génèrent plus de puissance et sont plus efficaces que les moteurs à courant continu à balais conventionnels de taille similaire. Un tel moteur comporte un stator comprenant des bobines alimentées de manière séquentielle, et comporte un rotor comprenant au moins un aimant permanent. L'utilisation de moteurs alimentés par batterie est aujourd'hui courante. Les batteries sont par exemple alimentées en énergie électrique grâce à des cellules photovoltaïques. Les moteurs BLDC en font partie.

La consommation en énergie électrique d'un moteur devient alors un point critique si l'on souhaite qu'à tout moment le moteur puisse répondre à des commandes d'ouverture ou de fermeture générées par un utilisateur.

Dans cette configuration, l'énergie consommée par le moteur est un point critique.

C'est en grande partie de cette consommation que va découler la capacité de la batterie à répondre à des commandes d'ouverture ou de fermeture générées par l'utilisateur.

Il est notamment souhaitable de fournir une solution qui permette d'optimiser la consommation d'un moteur BLDC pour garantir qu'à tout moment le moteur puisse répondre à des commandes d'ouverture ou de fermeture.

Les documents FR 3 104 190 A1, WO 2016/177736 A1 et EP 1 686 683 A1 décrivent des exemples de l'art antérieur pertinent.

EXPOSE DE L'INVENTION

Un objet de la présente invention est de proposer un procédé d'optimisation de la consommation en énergie électrique d'un moteur sans balai à courant continu comportant un stator et un rotor, le moteur étant destiné à entraîner en montée et en descente une charge et étant alimenté par une alimentation électrique, le procédé étant exécuté par un contrôleur du moteur et comportant les étapes de :

- détection d'une commande pour la mise en rotation du moteur,
- mesure de la tension délivrée par l'alimentation électrique,
- calcul d'une première et d'une seconde consignes de vitesse à partir de la mesure de tension, la valeur de la seconde consigne de vitesse étant supérieure à la valeur de la première consigne de vitesse,
- détection si le moteur est dans un état dans lequel la charge entraine le moteur,
- sélection de la première consigne de vitesse si le moteur n'est pas dans l'état dans lequel la charge entraine le moteur,
- sélection de la seconde consigne de vitesse si le moteur est dans l'état dans lequel la charge entraine le moteur.

La présente invention concerne aussi un dispositif d'optimisation de la consommation en énergie électrique d'un moteur sans balai à courant continu comportant un stator et un rotor, le moteur étant destiné à entraîner en montée et en descente une charge et étant alimenté par une alimentation électrique, le dispositif étant compris dans un contrôleur du moteur et comportant:

- des moyens de détection d'une commande pour la mise en rotation du moteur,
- des moyens de mesure de la tension délivrée par la batterie,
- des moyens de calcul d'une première et d'une seconde consignes de vitesse à partir de la mesure de tension obtenue, la valeur de la seconde consigne de vitesse étant supérieure à la valeur de la première consigne de vitesse,
- des moyens de détection si le moteur est dans un état dans lequel la charge entraine le moteur,
- des moyens de sélection de la première consigne de vitesse si le moteur n'est pas dans l'état dans lequel la charge entraine le moteur,
- des moyens de sélection de la seconde consigne de vitesse si le moteur est dans l'état dans lequel la charge entraine le moteur.

Ainsi, la présente invention permet de réduire la consommation en énergie électrique du moteur. La tension réelle délivrée par l'alimentation électrique est prise en compte pour déterminer les première et seconde consignes de vitesse. Lorsque le moteur entraine la charge et que la tension de l'alimentation électrique est proche de sa tension nominale, la durée de rotation du moteur est réduite en adaptant la première vitesse de consigne à la tension fournie par l'alimentation électrique. Lorsque le moteur est entrainé par la charge, un freinage de celui-ci est effectué. Le freinage est consommateur d'énergie électrique. En appliquant une seconde vitesse de consigne supérieure à la première vitesse de consigne, la durée du freinage est réduite et la consommation en énergie électrique est réduite.

Selon un mode de réalisation particulier, la détection si le moteur est dans un état dans lequel la charge entraine le moteur comporte les étapes de :

- détermination d'une vitesse réelle du moteur,
- détermination si le moteur est dans une phase d'accélération ou dans une phase de régulation,
- détermination que la charge entraine le moteur si le rapport de la vitesse réelle sur une vitesse théorique est supérieur à un premier seuil prédéterminé lorsque le moteur est dans une phase d'accélération,
- détection que la charge entraine le moteur si la vitesse réelle est supérieure à une vitesse de consigne et si le rapport d'une tension d'alimentation moyenne réelle sur une tension d'alimentation moyenne théorique est inférieur à un deuxième seuil prédéterminé lorsque le moteur est dans une phase de régulation.

Ainsi, la sélection de la vitesse de consigne du moteur est effectuée de manière automatique.

Selon un mode de réalisation particulier, lorsque la charge entraine le moteur, un décalage angulaire égal à une valeur angulaire initiale prédéterminée, le procédé comportant en outre, lorsque la charge entraine le moteur, des étapes de :

- détermination d'un écart de vitesse égal à la différence entre une vitesse de consigne et la vitesse réelle,
- détermination d'une valeur de correction égale à l'écart de vitesse divisé par un coefficient prédéterminé si la valeur absolue de l'écart de vitesse est supérieure à un seuil de vitesse prédéterminé,
- application d'un nouveau décalage angulaire calculé en ajoutant la valeur de correction au décalage angulaire précédent et limité en valeur absolue à une valeur angulaire maximale prédéterminée.

Ainsi, il est possible d'ajuster la vitesse de consigne du moteur lorsque la charge entraine le moteur.

Selon un mode de réalisation particulier, la vitesse réelle est déterminée périodiquement avec une période de durée prédéterminée et le procédé comporte en outre, lorsque la charge entraine le moteur :

- enregistrement, pour chaque vitesse réelle déterminée, d'une valeur du décalage angulaire appliqué,
- enregistrement de chaque valeur de décalage angulaire appliqué en association avec 14 valeurs précédemment enregistrées des décalages angulaires appliqués de sorte à constituer un ensemble de 15 valeurs,
- calcul, pour chaque ensemble de 15 valeurs, d'une variation de décalage égale à la valeur absolue de la différence entre la somme des valeurs absolues des 5 décalages angulaires les plus anciens de l'ensemble des 15 valeurs et la somme des valeurs absolues des 5 décalages angulaires les plus récents de l'ensemble des 15 valeurs,
- arrêt de l'application d'un décalage angulaire et détermination que le moteur entre la charge lorsque la variation de décalage est supérieure à un seuil de fin d'entraînement. Ainsi, la présente invention permet de modifier la vitesse de consigne dès que la charge n'entraine plus le moteur.

Selon un mode de réalisation particulier, le seuil de fin d'entraînement Sfe est égal à $Sfe = arrondi(U_{nom} - U_{mes}) + \beta$, où $U_{nom}$ est une valeur d'une tension nominale de l'alimentation électrique, $U_{mes}$ est une valeur de tension d'alimentation mesurée préalablement au démarrage du moteur, et $\beta$ est un angle prédéterminé.

Selon un mode de réalisation particulier, la première consigne de vitesse Vce et la seconde consigne de vitesse Vme sont déterminées selon les formules suivantes :

$$Vce = V_{nom} * U_{mes}/U_{nom}$$ où $V_{nom}$ est une vitesse prédéterminée lorsque la tension de l'alimentation électrique est égale à sa tension nominale $U_{nom}$,

$$Vme = Vce + a + b(U_{nom} - U_{mes})$$ où a et b sont des valeurs définies pour un type de moteur donné.

Ainsi, la présente invention prend en compte la tension réelle délivrée par l'alimentation électrique pour la détermination des première et seconde consignes de vitesse.

Selon un mode de réalisation particulier, l'alimentation électrique est une batterie. L'invention concerne également un programme d'ordinateur, qui peut être stocké sur un support et/ou téléchargé d'un réseau de communication, afin d'être lu par un processeur. Ce programme d'ordinateur comprend des instructions pour implémenter le procédé mentionné ci-dessus dans l'un quelconque de leurs modes de réalisation, lorsque ledit programme est exécuté par le processeur. L'invention concerne également un support de stockage d'informations stockant un tel programme d'ordinateur.

BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :

[Fig. 1] illustre schématiquement un dispositif d'obturation motorisé d'une baie ;

[Fig. 2] illustre schématiquement un exemple d'architecture matérielle d'une unité de contrôle d'un moteur sans balai à courant continu ;

[Fig. 3] illustre schématiquement un procédé de détermination d'une vitesse de consigne d'un moteur selon le cas où le moteur entraine une charge ou est entraîné par la charge;

[Fig. 4] illustre schématiquement le procédé de détection d'une situation dans laquelle le moteur est entraîné par la charge ;

[Fig. 5] illustre ainsi schématiquement le procédé de détection d'une situation dans laquelle le moteur n'est plus entrainé par la charge.

## EXPOSE DETAILLE DE MODES DE REALISATION

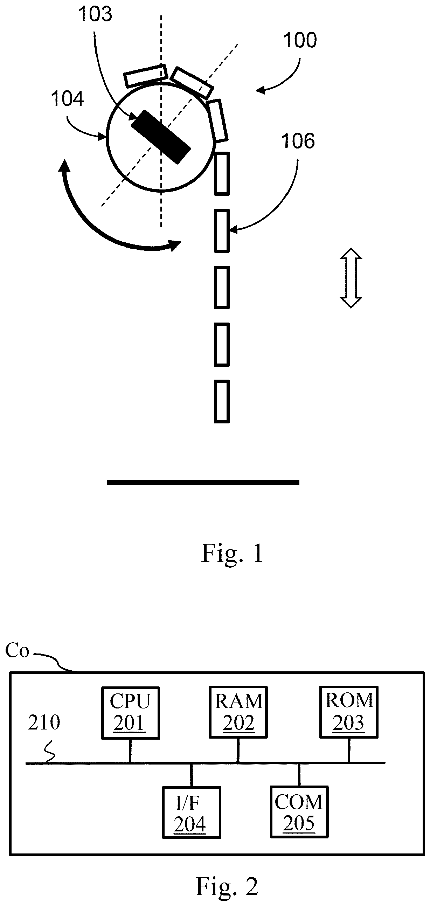

La Fig. 1 montre un dispositif d'obturation motorisé d'une baie 100 qui est destiné à venir s'installer dans un coffre de volet d'un bâtiment au-dessus de la baie à obturer. Le dispositif d'obturation motorisé 100 comprend :

- une charge telle qu'un tablier ou volet roulant 106, et,

- des moyens d'entraînement constitués d'un tube moteur 103 et d'un tube d'enroulement 104 et destinés à entraîner en montée et en descente le tablier 106.

Le tube moteur 103 est par exemple coaxial avec le tube d'enroulement 104 et il est disposé à l'intérieur de celui-ci. La fixation du tablier 106 sur le tube d'enroulement 104 s'effectue à l'aide d'un dispositif de verrouillage souple ou rigide. Le tube d'enroulement 104 est entraîné en rotation par le tube moteur 103 et entraîne alors la montée ou la descente du tablier 106 selon que le sens de rotation du tube d'enroulement 104 génère l'enroulement ou le déroulement du tablier 106 autour du tube d'enroulement 104.

Généralement, le tablier 106 est constitué de lattes fixées les unes aux autres de manière à présenter un espace entre elles.

Le moteur 103 comporte un stator comprenant des bobines et comporte un rotor comprenant au moins un aimant permanent. Par exemple, le stator comporte trois bobines et le rotor comporte une série d'aimants comprenant six pôles. Les bobines du rotor sont alimentées de manière séquentielle de sorte à générer un champ magnétique induit tournant. Le rotor est alors entraîné en rotation en raison du couplage entre le champ magnétique induit tournant du stator et le champ magnétique généré par l'aimant permanent du rotor. Selon un mode de réalisation particulier, le moteur 103 est destiné à entraîner un mouvement d'une charge telle que le tablier 106, ou volet roulant, et permet ainsi d'ouvrir et de fermer le tablier 106.

Le moteur 103 est contrôlé par un contrôleur Co qui permet de commuter électroniquement l'alimentation de chaque bobine en tenant compte, à chaque instant, de la position angulaire du rotor. Ainsi, l'alimentation des bobines peut être effectuée de manière optimale pour obtenir une rotation souhaitée du rotor.

Le contrôleur peut suivre un schéma de contrôle trapézoïdal comportant six configurations d'alimentation des bobines exécutées séquentiellement. Les six configurations entraînent la rotation du moteur d'un secteur angulaire prédéfini lorsqu'elles sont exécutées successivement. Selon un mode de réalisation particulier, l'exécution de la séquence des six configurations d'alimentation entraîne une rotation partielle du rotor d'un secteur angulaire de 120° et ladite séquence est répétée à trois reprises par tour du moteur. A chaque configuration d'alimentation est associé un domaine angulaire du rotor dans chaque secteur angulaire, ledit domaine angulaire étant distinct des domaines angulaires associés aux autres configurations d'alimentation dans ledit secteur. Par exemple, pour un moteur comportant trois secteurs angulaires de 120°, chaque configuration d'alimentation est associée à un domaine angulaire d'un angle de 20° dans chacun des secteurs angulaires.

Selon un mode de réalisation, le moteur 103 est alimenté par une alimentation électrique générant une tension d'alimentation nominale. En outre, le contrôleur génère un signal de modulation de largeur d'impulsion MLI (ou PWM pour « Pulse Width Modulation » en anglais) comportant une alternance périodique entre un premier état discret ayant une valeur de tension maximale égale à la tension d'alimentation continue du moteur et un second état discret ayant une valeur de tension minimale nulle. La fréquence du signal MLI est fixe tandis que le rapport de durée entre le premier état discret et le second état discret varie et est appelé rapport cyclique. Lorsque le rapport cyclique du signal MLI est de 0%, la tension d'alimentation moyenne du moteur est nulle et lorsque le rapport cyclique du signal MLI est de 100%, la tension d'alimentation moyenne du moteur est égale à la tension maximale disponible à l'entrée du moteur. Le signal MLI permet ainsi de faire varier la tension moyenne d'alimentation du moteur en modifiant le rapport cyclique.

Le contrôleur Co détecte un phénomène de charge entraînante. Un tel phénomène de charge entraînante peut se produire par exemple lorsque la rotation du moteur, destinée à entraîner le tablier 106 dans un mouvement de descente, se trouve entraînée par le mouvement du tablier 106 en raison de son poids et de sa vitesse. C'est alors le tablier 106 qui entraîne le moteur et non l'inverse.

Lorsque le moteur entraine le volet en montée ou en descente, l'énergie consommée dépend du courant consommé, donc du couple et de la durée du mouvement, donc de la vitesse.

Pour optimiser la consommation, il est possible de modifier la durée du mouvement en augmentant la vitesse si la tension délivrée par la batterie le permet.

Dans le cas particulier où le volet entraine le moteur durant un mouvement de descente, le moteur doit réaliser un freinage afin de respecter une vitesse de consigne.

Ce freinage consiste par exemple à commander l'alimentation des bobines du stator avec un décalage angulaire par rapport à la commande normale, et avec une consigne de tension d'alimentation des bobines réglée à 100%.

La consigne de tension étant réglée à 100%, plus la tension de batterie est élevée, plus le freinage doit être important afin de respecter la vitesse de consigne définie.

Dans ce cas particulier, le seul moyen d'optimiser la consommation consiste à diminuer le courant de freinage.

A noter que cette diminution induit une augmentation de la vitesse, ce qui diminue la durée du mouvement, et donc aussi la consommation.

L'alimentation en énergie électrique est une alimentation électrique obtenue à partir d'une alimentation électrique d'un bâtiment ou est une batterie.

La Fig. 2 illustre schématiquement un exemple d'architecture matérielle contrôleur Co. Le contrôleur Co comporte alors, reliés par un bus de communication 210 : un processeur ou CPU (« Central Processing Unit » en anglais) 201 ; une mémoire vive RAM (« Random Access Memory » en anglais) 202 ; une mémoire non volatile ROM (« Read Only Memory » en anglais) 203, par exemple de type FLASH ; une interface de communication 205 permettant de recevoir des commandes de montée descente du volet roulant et une interface 204 permettant de communiquer avec d'autres éléments du moteur tels qu'un capteur de vitesse ou un contrôleur de l'alimentation des bobines et des moyens de mesure de la tension de la batterie.

Le processeur 201 est capable d'exécuter des instructions chargées dans la RAM 202 à partir de la ROM 203, d'une mémoire externe (non représentée), ou d'un réseau de communication. Lorsque le contrôleur Co est mis sous tension, le processeur 201 est capable de lire de la RAM 202 des instructions et de les exécuter. Ces instructions forment un programme d'ordinateur causant l'implémentation, par le processeur 201, de tout ou partie des algorithmes et étapes décrits ici en relation avec le contrôleur Co.

Ainsi, tout ou partie des algorithmes et étapes décrits en relation avec le contrôleur Co du moteur peut être implémenté sous forme logicielle par exécution d'un ensemble d'instructions par une machine programmable, telle qu'un DSP (« Digital Signal Processor » en anglais) ou un microcontrôleur, ou sous forme matérielle par une machine ou un composant dédié, tel qu'un FPGA (« Field-Programmable Gate Array » en anglais) ou un ASIC (« Application-Specific Integrated Circuit » en anglais).

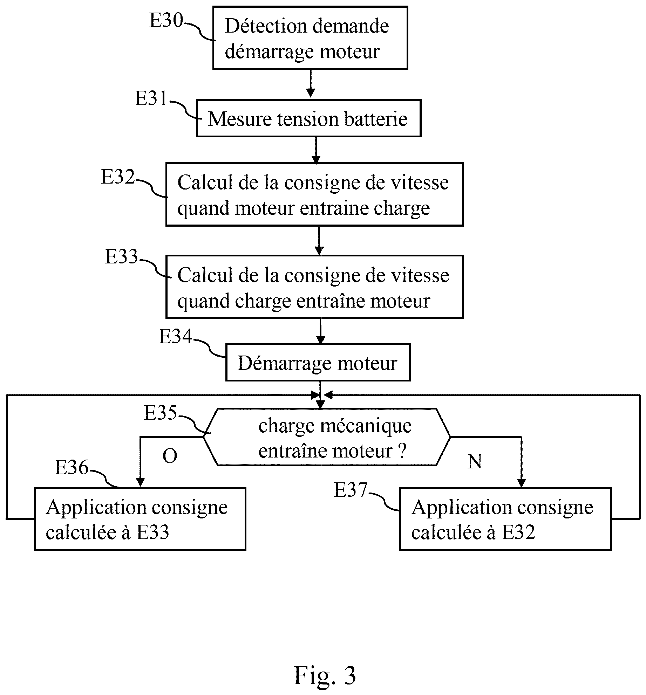

La Fig. 3 illustre schématiquement un procédé de régulation de la consommation électrique du moteur selon la présente invention.

A l'étape E30, le contrôleur Co détecte une commande visant à déplacer le volet roulant 106.

A l'étape suivante E31, le contrôleur Co commande la mesure de la tension de l'alimentation électrique que $U_{mes}$.

A l'étape suivante E32, le contrôleur Co calcule une consigne de vitesse lorsque le moteur entraine la charge. La consigne de vitesse Vce, lorsque le moteur entraîne la charge, est calculée de la manière suivante : $Vce = V_{nom} * U_{mes} / V_{nom}$, où $V_{nom}$ est une vitesse prédéterminée lorsque la tension de l'alimentation électrique est égale à sa tension nominale $U_{nom}$, La vitesse prédéterminée est par exemple égale à 3000 tr/mn.

Par exemple, la tension nominale est une tension égale à 6, 12, 18 ou 24 Volts.

A l'étape suivante E33, le contrôleur Co calcule une consigne de vitesse lorsque la charge entraine le moteur. La consigne de vitesse Vme, lorsque la charge entraine le moteur, est calculée de la manière suivante : $Vme = Vce + a + b(U_{nom} - U_{mes})$ où a et b sont des valeurs définies pour un type de moteur donné.

Il est à remarquer ici que la vitesse de consigne, lorsque la charge entraine le moteur, est supérieure à la vitesse de consigne lorsque le moteur entraine la charge. Par exemple, a = 250 et b=25.

A l'étape suivante E34, le contrôleur Co commande le démarrage du moteur.

A l'étape suivante E35, le contrôleur Co vérifie si la charge entraine le moteur. Dans l'affirmative, le contrôleur Co passe à l'étape E36. Dans la négative, le contrôleur Co passe à l'étape E37.

A l'étape E36, le contrôleur Co applique la consigne de vitesse calculée à l'étape E33 et retourne à l'étape E35.

A l'étape E37, le contrôleur Co applique la consigne de vitesse calculée à l'étape E32 et retourne à l'étape E35.

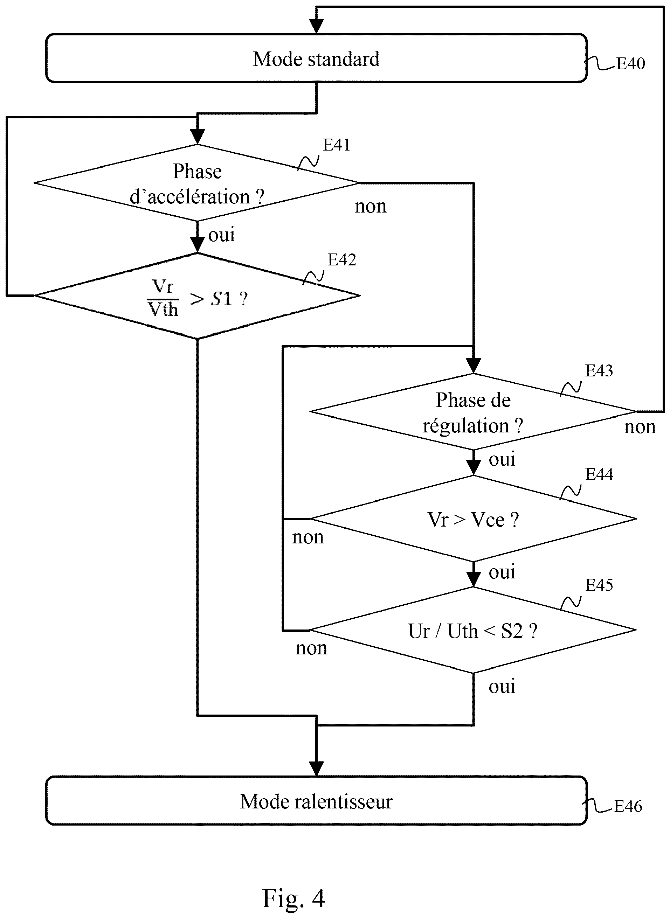

La Fig. 4 illustre schématiquement un procédé de détection d'une situation dans laquelle la charge entraine le moteur.

Dans une première étape E40, le contrôleur Co du moteur se trouve dans le mode dans lequel le moteur entraine la charge. Dans le mode dans lequel le moteur entraine la charge, l'alimentation des bobines du stator est effectuée en tenant compte à chaque instant de la position angulaire du rotor afin d'optimiser l'orientation du champ magnétique induit pour obtenir la rotation du rotor. Autrement dit, chaque configuration est exécutée lors de la rotation du rotor lorsque la position angulaire du rotor se trouve précisément dans un domaine angulaire associé à ladite configuration.

En outre, les bobines sont alimentées avec une tension moyenne d'alimentation de sorte que le rotor tourne à une vitesse à atteindre dite vitesse de consigne Vce. Le moteur est capable à tout instant de déterminer une vitesse réelle Vr du moteur. La vitesse réelle Vr du moteur peut être mesurée à l'aide d'un capteur à effet hall et d'un aimant par exemple placé sur l'axe du moteur. La vitesse réelle Vr est régulée par un asservissement qui a pour rôle d'augmenter, respectivement de diminuer, la tension moyenne d'alimentation lorsque la vitesse réelle Vr est inférieure, respectivement supérieure, à la vitesse de consigne Vce. La tension d'alimentation moyenne peut être modifiée en faisant varier le rapport cyclique du signal MLI.

Dans le mode dans lequel le moteur entraine la charge, le contrôleur Co du moteur cherche à détecter un phénomène de charge entraînante.

Dans une étape E41 suivante, le contrôleur Co détermine si le moteur se trouve dans une phase d'accélération. Par exemple, le contrôleur Co détermine que le moteur se trouve dans une phase d'accélération après qu'un ordre de démarrage ou d'augmentation de la vitesse de consigne Vce est reçu par le moteur, et tant que la phase de régulation n'est pas terminée. Une phase d'accélération se termine lorsqu'une phase de régulation débute, autrement dit au moment où la vitesse réelle Vr du moteur atteint la vitesse de consigne Vce ou lorsqu'un ordre d'arrêt est reçu. Si le moteur se trouve dans une phase d'accélération, une étape E42 est effectuée. Sinon, une étape E43 est effectuée.

A l'étape E42, le contrôleur Co détermine si le rapport de la vitesse réelle Vr du moteur et de la vitesse théorique Vth est supérieur à un premier seuil prédéterminé S1, tel que $S1 = 1,2$. Pour cela, le contrôleur Co détermine la vitesse réelle Vr à un instant t présent, par exemple en envoyant un ordre de mesure au capteur à effet Hall. Selon un mode de réalisation, la vitesse réelle Vr est déterminée périodiquement. Chaque nouvelle valeur de la vitesse réelle Vr est ainsi déterminée après écoulement d'un délai prédéterminé d'une durée prédéterminée $\Delta t$ à compter d'une précédente détermination de la vitesse réelle Vr. Par exemple, la vitesse réelle Vr est déterminée toutes les 100 ms.

En outre, la vitesse théorique Vth est calculée en considérant une progression prédéfinie de la vitesse en fonction du temps entre un instant initial t0 de la phase d'accélération, auquel la vitesse initiale est définie, et un instant final tf de la phase d'accélération auquel la vitesse de consigne Vce est supposée être atteinte. Le contrôleur Co compare ainsi la vitesse réelle Vr, mesurée à l'instant t, à la vitesse théorique Vth calculée à l'instant t-t0.

Selon un exemple de réalisation, la vitesse théorique Vth est augmentée, lors de la phase d'accélération, d'un pas de vitesse prédéterminé à chaque intervalle de temps d'une durée prédéfinie. Par exemple, la vitesse est augmentée de 150 tours/min toutes les 50 ms. Le pas de vitesse prédéterminé peut être calculé en multipliant la vitesse nominale du moteur, définie pour une tension d'alimentation nominale, par exemple à 12V, par un facteur prédéterminé. Par exemple, pour une vitesse nominale de 3000 tours/min à 12 V et un facteur prédéterminé de 5% déterminé de manière empirique au moyen d'essais fonctionnels, le pas de vitesse prédéterminé est de 150 tours/min. Si le rapport de la vitesse réelle Vr sur la vitesse théorique Vth est supérieur au premier seuil prédéterminé, le contrôleur Co considère qu'un phénomène de charge entraînante est détecté et le contrôleur Co passe à l'étape E46. Sinon, le contrôleur Co retourne à l'étape E41.

A l'étape E43, le contrôleur Co vérifie si le moteur se trouve dans une phase de régulation. Par exemple, le contrôleur Co détermine qu'une phase de régulation débute lorsqu'une phase d'accélération précédente se termine, autrement dit au moment où la vitesse réelle Vr atteint la vitesse de consigne Vc après qu'un ordre de démarrage a été reçu par le moteur. Le contrôleur Co considère en outre qu'une phase de régulation reste active tant qu'aucun ordre d'arrêt ou qu'aucun ordre de modification de la vitesse de consigne n'est reçu. Si c'est le cas, une étape E44 est effectuée. Sinon, le moteur retourne à l'étape E40.

A l'étape E44, le contrôleur Co détermine si la vitesse réelle Vr est supérieure à la vitesse de consigne Vce. Pour cela, le contrôleur Co détermine la vitesse réelle Vr à un instant t présent ou après écoulement du délai prédéterminé à compter d'une précédente détermination de la vitesse réelle Vr. Le contrôleur Co compare ladite vitesse réelle Vr à la vitesse de consigne Vce. Si la vitesse réelle Vr est supérieure à la vitesse de consigne Vce, une étape E45 est effectuée. Sinon, le moteur retourne à l'étape E43.

A l'étape E45, le contrôleur Co détermine une tension d'alimentation moyenne réelle Ur. La tension d'alimentation moyenne Ur est par exemple obtenue par lecture du rapport cyclique réel du signal MLI. Le contrôleur Co compare ensuite la tension d'alimentation moyenne réelle Ur à une tension d'alimentation moyenne théorique Uth calculée. Ladite tension d'alimentation moyenne théorique Uth, correspondant par exemple à un rapport cyclique théorique du signal MLI, est calculée en prenant le rapport de la vitesse de consigne Vce sur la vitesse nominale du moteur, multiplié par un facteur correctif permettant de tenir compte d'une fluctuation de la tension d'alimentation générée par la batterie et égal au rapport de la tension nominale sur la tension réelle courante de la batterie, et multiplié par la résolution du signal MLI.

Si le rapport entre la tension d'alimentation moyenne réelle Ur et la tension d'alimentation moyenne théorique Uth est inférieur à un deuxième seuil prédéterminé S2, par exemple $S2 = 0,9$, le contrôleur Co considère qu'un phénomène de charge entraînante est détecté et l'étape E46 est effectuée. Autrement dit, si $Ur/Uth < S2$, un phénomène de charge entraînante est détecté. Sinon, le contrôleur Co retourne à l'étape E43.

A l'étape E46, le contrôleur Co passe dans le mode dans lequel la charge entraine le moteur.

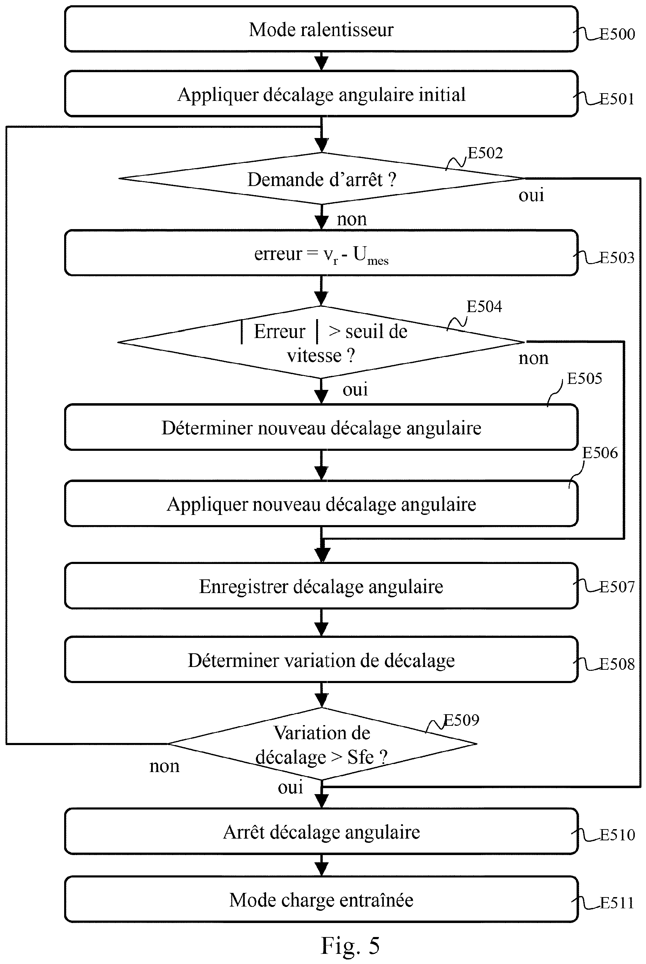

La Fig. 5 illustre ainsi schématiquement le procédé de de détection d'une situation dans laquelle le moteur n'est plus entrainé par la charge.

A l'étape E500, le contrôleur Co considère qu'un phénomène de charge entraînante est détecté. Le contrôleur Co ajuste alors la tension d'alimentation moyenne à une tension d'alimentation maximale disponible en réglant par exemple le rapport cyclique du signal MLI à 100%.

En outre, le contrôleur Co détermine un seuil de fin d'entraînement Sfe. Le seuil de fin d'entraînement Sfe permet de détecter un arrêt du phénomène de charge entraînante. C'est par exemple le cas lorsque la charge atteint une position extrême et se retrouve entièrement abaissé ou fermé, lorsqu'un couple d'entraînement de la charge 106 diminue en raison d'une réduction du diamètre d'enroulement de la charge 106 autour du tube d'enroulement 104 ou lorsque des frottements augmentent et ralentissent alors le mouvement de la charge 106. Le seuil de fin d'entraînement Sfe est une valeur d'angle prédéterminée. Selon un mode de réalisation particulier, le seuil de fin d'entraînement Sfe est égal à l'arrondi de la différence entre la valeur de tension nominale de l'alimentation électrique et une valeur de tension d'alimentation mesurée $U_{mes}$ préalablement au démarrage du moteur, autrement dit la tension à vide générée par l'alimentation électrique, à laquelle s'ajoute un angle prédéterminé $\beta$. Autrement dit, $Sfe = arrondi(U_{nom} - U_{mes}) + \beta$. Selon, un exemple, $U_{nom}= 12V$ et $\beta = 9°$.

Dans une étape E501 suivante, le contrôleur Co applique un décalage angulaire sur le champ magnétique du stator du moteur par rapport à une orientation du champ magnétique du stator optimale correspondant à la position angulaire courante du rotor du moteur et dans un sens opposé au sens de rotation du moteur. Autrement dit, lors de la rotation du rotor, chaque configuration d'alimentation des bobines du stator est exécutée avec un retard égal au décalage angulaire par rapport à la position d'un domaine angulaire du rotor associé à ladite configuration. Ainsi, l'application du décalage angulaire permet de freiner le moteur et de limiter le phénomène de charge entraînante tout en limitant la consommation de courant.

Le décalage angulaire initialement appliqué, dit décalage angulaire initial, est défini par une valeur angulaire initiale prédéterminée, par exemple 15°, et par un signe de sens opposé au sens de rotation du moteur. Par exemple, si le sens de rotation du moteur est positif, autrement dit si la vitesse du moteur est considérée positive, le décalage angulaire est de - 15°. Inversement, si le sens de rotation du moteur est négatif, autrement dit si la vitesse du moteur est considérée négative, le décalage angulaire est de + 15°.

Dans une étape E502 suivante, le contrôleur Co détermine si une demande d'arrêt a été reçue pour le moteur. Si c'est le cas, une étape E510 est effectuée. Sinon, une étape E503 est effectuée.

A l'étape E503, le contrôleur Co détermine la vitesse réelle Vr par mesure à un instant présent. Selon un mode de réalisation, la vitesse réelle Vr est déterminée après écoulement du délai prédéterminé à compter d'une précédente détermination de la vitesse réelle Vr. La vitesse réelle Vr est ainsi déterminée périodiquement, avec une période de la durée prédéterminée $\Delta t$, par exemple toutes les 100 ms.

En outre, le contrôleur Co calcule un écart de vitesse égal à la différence entre la vitesse réelle Vr et la vitesse de consigne $V_{me}$, soit : $écart\ de\ vitesse = Vr - V_{me}$.

Dans une étape E504 suivante, le contrôleur Co détermine si la valeur absolue de l'écart de vitesse est supérieure à un seuil de vitesse prédéterminé, par exemple un seuil de 20 tours/min. Si c'est le cas, le contrôleur Co effectue une étape E505. Sinon, le contrôleur Co effectue directement une étape E507.

A l'étape E505, le contrôleur Co détermine une correction angulaire, homogène à une unité d'angle et égale à l'écart de vitesse divisé par un coefficient c de proportionnalité. Le contrôleur Co détermine ensuite un nouveau décalage angulaire en ajoutant la correction angulaire au décalage angulaire précédent. Si la somme calculée du décalage angulaire précédent et de la correction angulaire est supérieure en valeur absolue à une valeur angulaire maximale prédéterminée, le nouveau décalage angulaire est alors égal à ladite valeur angulaire maximale prédéterminée et de signe opposé au sens de la rotation du moteur. Par exemple, pour une valeur angulaire maximale prédéterminée de 30°, si la somme du décalage angulaire précédent et de la correction angulaire vaut -31°, alors le nouveau décalage angulaire est limité et est égal -30°.

Dans une étape E506 suivante, le contrôleur Co applique le nouveau décalage angulaire en remplacement du décalage angulaire précédent. Le contrôleur Co effectue ensuite l'étape E507.

A l'étape E507, le contrôleur Co enregistre la valeur courante du décalage angulaire, autrement dit la valeur du décalage angulaire effectivement appliqué.

La valeur courante du décalage angulaire est en outre enregistrée en association avec les 14 valeurs des décalages angulaires précédemment enregistrées. Une valeur courante du décalage angulaire est enregistrée à chaque fois que le contrôleur Co effectue l'étape E507. Dit autrement, à chaque nouvelle détermination de la vitesse réelle Vr correspond une valeur courante de décalage angulaire enregistrée. Ainsi, deux valeurs courantes successives de décalages angulaires enregistrées sont temporellement distantes de la période de durée prédéterminée $\Delta t$. La valeur courante du décalage angulaire correspond à la valeur du nouveau décalage angulaire déterminé à l'étape E505 précédente lorsque la valeur absolue de l'écart de vitesse est supérieure au seuil de vitesse prédéterminé à l'étape E504 et est identique à la valeur de décalage angulaire précédemment enregistrée sinon.

Un ensemble de 15 valeurs successives de décalages angulaires est ainsi constitué à l'étape E507, par exemple à l'aide d'une mémoire tampon circulaire de taille fixe comportant 15 éléments.

Dans une étape E508 suivante, le contrôleur Co détermine une variation de décalage $\Delta_D$. La variation de décalage $\Delta_D$ est égale à la valeur absolue de la différence entre la somme des cinq valeurs des décalages angulaires en valeur absolue les plus anciennes et la somme des cinq valeurs des décalages angulaires en valeur absolue les plus récentes de l'ensemble des 15 valeurs. Autrement dit : :

$$\Delta_D = \left| \sum_{i=1}^{5} |\alpha_i| - \sum_{i=11}^{15} |\alpha_i| \right|$$ , avec $\alpha_i$ étant les valeurs des décalages angulaires de l'ensemble des 15 valeurs, de rang i croissant dans un ordre chronologique.

Dans une étape E509 suivante, le contrôleur Co compare la variation de décalage $\Delta_D$ au seuil de fin d'entraînement Sfe. Si la variation de décalage $\Delta_D$. est supérieure au seuil d'entraînement Sfe, l'étape E510 est effectuée. Sinon, le contrôleur Co retourne à l'étape 402.

A l'étape E511, le contrôleur Co arrête l'application du décalage angulaire, le moteur n'étant plus entraîné par la charge.

## Revendications

1. Procédé d'optimisation de la consommation en énergie électrique d'un moteur (103) sans balai à courant continu comportant un stator et un rotor, le moteur (103) étant destiné à entraîner en montée et en descente une charge (106) et étant alimenté par une alimentation électrique, le procédé étant exécuté par un contrôleur du moteur et comportant les étapes de :

   - détection (E30) d'une commande pour la mise en rotation du moteur,
   - mesure (E31) de la tension délivrée par l'alimentation électrique,

   **caractérisé en ce que** le procédé comporte en outre les étapes de :

   - calcul d'une première (E32) et d'une seconde (E33) consignes de vitesse à partir de la mesure de tension, la valeur de la seconde consigne de vitesse étant supérieure à la valeur de la première consigne de vitesse,
   - détection (E35) si le moteur est dans un état dans lequel la charge entraine le moteur,
   - sélection (E37) de la première consigne de vitesse si le moteur n'est pas dans l'état dans lequel la charge entraine le moteur,
   - sélection (E36) de la seconde consigne de vitesse si le moteur est dans l'état dans lequel la charge entraine le moteur.

2. Procédé selon la revendication 1, **caractérisé en ce que** la détection si le moteur est dans un état dans lequel la charge entraine le moteur comporte les étapes de :

   - détermination d'une vitesse réelle du moteur,
   - détermination si le moteur est dans une phase d'accélération (E41) ou dans une phase de régulation (E43),
   - détermination que la charge entraine le moteur si le rapport de la vitesse réelle sur une vitesse théorique est supérieur à un premier seuil prédéterminé (E42) lorsque le moteur est dans une phase d'accélération,
   - détection que la charge entraine le moteur si la vitesse réelle est supérieure à une vitesse de consigne (E44) et si le rapport d'une tension d'alimentation moyenne réelle sur une tension d'alimentation moyenne théorique est inférieur à un deuxième seuil prédéterminé (E45) lorsque le moteur est dans une phase de régulation.

3. Procédé selon la revendication 1 ou 2, **caractérisé en ce que**, lorsque la charge entraine le moteur, un décalage angulaire égal à une valeur angulaire initiale prédéterminée, le procédé comportant en outre, lorsque la charge entraine le moteur, des étapes de :

   - Détermination (E503) d'un écart de vitesse égal à la différence entre une vitesse de consigne et la vitesse réelle,
   - Détermination (E505) d'une valeur de correction égale à l'écart de vitesse divisé par un coefficient prédéterminé si la valeur absolue de l'écart de vitesse est supérieure à un seuil de vitesse prédéterminé (E504),
   - Application (E506) d'un nouveau décalage angulaire calculé en ajoutant la valeur de correction au décalage angulaire précédent et limité en valeur absolue à une valeur angulaire maximale prédéterminée.

4. Procédé selon la revendication 3, **caractérisé en ce que** la vitesse réelle est déterminée périodiquement avec une période de durée prédéterminée et **en ce que** le procédé comporte en outre, lorsque la charge entraine le moteur :

   - enregistrement (E507), pour chaque vitesse réelle déterminée, d'une valeur du décalage angulaire appliqué,
   - enregistrement de chaque valeur de décalage angulaire appliqué en association avec 14 valeurs précédemment enregistrées des décalages angulaires appliqués de sorte à constituer un ensemble de 15 valeurs,
   - calcul (E508), pour chaque ensemble de 15 valeurs, d'une variation de décalage égale à la valeur absolue de la différence entre la somme des valeurs absolues des 5 décalages angulaires les plus anciens de l'ensemble des 15 valeurs et la somme des valeurs absolues des 5 décalages angulaires les plus récents de l'ensemble des 15 valeurs,
   - arrêt (E511) de l'application d'un décalage angulaire et détermination que le moteur entre la charge lorsque la variation de décalage est supérieure à un seuil de fin d'entraînement (E509).

5. Procédé selon la revendication 4, **caractérisé en ce que** le seuil de fin d'entraînement Sfe est égal à : $Sfe = arrondi(U_{nom} - U_{mes}) + \beta$, où $U_{nom}$ est une valeur d'une tension nominale de l'alimentation électrique, $U_{mes}$ est une valeur de tension d'alimentation mesurée préalablement au démarrage du moteur, et $\beta$ est un angle prédéterminé.

6. Procédé selon l'une des revendications 1 à 5, **caractérisé en ce que** la première consigne de vitesse Vce et la seconde consigne de vitesse Vme sont déterminées selon les formules suivantes :

   $Vce = V_{nom} * U_{mes}/U_{nom}$ où $V_{nom}$ est une vitesse prédéterminée lorsque la tension de l'alimentation électrique est égale à sa tension nominale $U_{nom}$,
   $Vme = Vce + a + b(U_{nom} - U_{mes})$ où a et b sont des valeurs définies pour un type de moteur donné.

7. Procédé selon l'une quelconque des revendications 1 à 6, **caractérisé en ce que** l'alimentation électrique est une batterie.

8. Dispositif d'optimisation de la consommation en énergie électrique d'un moteur (103) sans balai à courant continu comportant un stator et un rotor, le moteur (103) étant destiné à entraîner en montée et en descente une charge et étant alimenté par une alimentation électrique, le dispositif étant compris dans un contrôleur du moteur et comportant :

   - des moyens de détection d'une commande pour la mise en rotation du moteur,
   - des moyens de mesure de la tension délivrée par l'alimentation électrique,

   **caractérisé en ce que** le dispositif comporte en outre :

   - des moyens de calcul d'une première et d'une seconde consignes de vitesse à partir de la mesure de tension, la valeur de la seconde consigne de vitesse étant supérieure à la valeur de la première consigne de vitesse,
   - des moyens de détection si le moteur est dans un état dans lequel la charge entraine le moteur,
   - des moyens de sélection de la première consigne de vitesse si le moteur n'est pas dans l'état dans lequel la charge entraine le moteur,
   - des moyens de sélection de la seconde consigne de vitesse si le moteur est dans l'état dans lequel la charge entraine le moteur.

9. Programme d'ordinateur pouvant être stocké sur un support et/ou téléchargé d'un réseau de communication, afin d'être lu par un processeur, et **caractérisé en ce qu'**il comprend des instructions pour implémenter le procédé selon l'une des revendications 1 à 6, lorsque ledit programme est exécuté par le processeur.

10. Support de stockage d'informations stockant un programme d'ordinateur selon la revendication précédente.

**Patentansprüche**

1. Verfahren zur Optimierung des Stromverbrauchs eines bürstenlosen Gleichstrommotors (103), der einen Stator und einen Rotor aufweist, wobei der Motor (103) dazu bestimmt ist, eine Last (106) aufwärts und abwärts anzutreiben und von einer Stromversorgung versorgt wird, wobei das Verfahren von einem Controller des Motors ausgeführt wird und die Schritte aufweist:

   - Erkennung (E30) eines Befehls zum Indrehungversetzen des Motors,
   - Messung (E31) der von der Stromversorgung gelieferten Spannung,

   **dadurch gekennzeichnet, dass** das Verfahren außerdem die Schritte aufweist:

   - Berechnung eines ersten (E32) und eines zweiten (E33) Geschwindigkeitssollwerts ausgehend von der Spannungsmessung, wobei der Wert des zweiten Geschwindigkeitssollwerts höher ist als der Wert des ersten Geschwindigkeitssollwerts,
   - Erkennung (E35), ob der Motor in einem Zustand ist, in dem die Last den Motor antreibt,
   - Auswahl (E37) des ersten Geschwindigkeitssollwerts, wenn der Motor nicht in dem Zustand ist, in dem die Last den Motor antreibt,
   - Auswahl (E36) des zweiten Geschwindigkeitssollwerts, wenn der Motor in dem Zustand ist, in dem die Last den Motor antreibt.

2. Verfahren nach Anspruch 1, **dadurch gekennzeichnet, dass** die Erkennung, ob der Motor in einem Zustand ist, in dem die Last den Motor antreibt, die Schritte aufweist:

   - Bestimmung einer tatsächlichen Geschwindigkeit des Motors,
   - Bestimmung, ob der Motor in einer Beschleunigungsphase (E41) oder in einer Regelungsphase (E43) ist,
   - Bestimmung, dass die Last den Motor antreibt, wenn das Verhältnis der tatsächlichen Geschwindigkeit zu einer theoretischen Geschwindigkeit höher ist als eine erste vorbestimmte Schwelle (E42), wenn der Motor in einer Beschleunigungsphase ist,

- Erkennung, dass die Last den Motor antreibt, wenn die tatsächliche Geschwindigkeit höher ist als eine Sollgeschwindigkeit (E44) und wenn das Verhältnis einer tatsächlichen mittleren Versorgungsspannung zu einer theoretischen mittleren Versorgungsspannung niedriger ist als eine zweite vorbestimmte Schwelle (E45), wenn der Motor in einer Regelungsphase ist.

3. Verfahren nach Anspruch 1 oder 2, **dadurch gekennzeichnet, dass**, wenn die Last den Motor antreibt, ein Winkelversatz gleich einem vorbestimmten Ausgangswinkelwert, wobei das Verfahren außerdem, wenn die Last den Motor antreibt, Schritte enthält der:

    - Bestimmung (E503) einer Geschwindigkeitsabweichung gleich der Differenz zwischen einer Sollgeschwindigkeit und der tatsächlichen Geschwindigkeit,
    - Bestimmung (E505) eines Korrekturwerts gleich der Geschwindigkeitsabweichung dividiert durch einen vorbestimmten Koeffizienten, wenn der Absolutwert der Geschwindigkeitsabweichung höher ist als eine vorbestimmte Geschwindigkeitsschwelle (E504),
    - Anwendung (E506) eines neuen Winkelversatzes, der durch Hinzufügen des Korrekturwerts zum vorhergehenden Winkelversatz berechnet wird und im Absolutwert auf einen vorbestimmten maximalen Winkelwert begrenzt ist.

4. Verfahren nach Anspruch 3, **dadurch gekennzeichnet, dass** die tatsächliche Geschwindigkeit periodisch mit einer Periode vorbestimmter Dauer bestimmt wird, und dass das Verfahren außerdem aufweist, wenn die Last den Motor antreibt:

    - Speichern (E507), für jede bestimmte tatsächliche Geschwindigkeit, eines Werts des angewendeten Winkelversatzes,
    - Speichern jedes Werts eines angewendeten Winkelversatzes zusammen mit 14 vorher gespeicherten Werten der angewendeten Winkelversätze, um eine Einheit von 15 Werten zu bilden,
    - Berechnung (E508), für jede Einheit von 15 Werten, einer Versatzänderung gleich dem Absolutwert der Differenz zwischen der Summe der Absolutwerte der 5 ältesten Winkelversätze der Einheit der 15 Werte und der Summe der 5 neuesten Winkelversätze der Einheit der 15 Werte,

    - Beenden (E511) der Anwendung eines Winkelversatzes und Bestimmung, dass der Motor zwischen der Last, wenn die Versatzänderung größer ist als eine Antriebsendeschwelle (E509).

5. Verfahren nach Anspruch 4, **dadurch gekennzeichnet, dass** die Antriebsendeschwelle Sfe gleich: $Sfe = Rundung\ (U_{nom} - U_{mes}) + \beta$ ist, wobei $U_{nom}$ ein Wert einer Nennspannung der Stromversorgung, $U_{mes}$ ein vor dem Start des Motors gemessener Versorgungsspannungswert und $\beta$ ein vorbestimmter Winkel ist.

6. Verfahren nach einem der Ansprüche 1 bis 5, **dadurch gekennzeichnet, dass** der erste Geschwindigkeitssollwert Vce und der zweite Geschwindigkeitssollwert Vme gemäß den folgenden Formeln bestimmt werden:

    $Vce = V_{nom} * U_{mes} / U_{nom}$, wobei $V_{nom}$ eine vorbestimmte Geschwindigkeit ist, wenn die Spannung der Stromversorgung gleich ihrer Nennspannung $U_{nom}$ ist,
    $Vme = Vce + a + b\ (U_{nom} - U_{mes})$, wobei a und b für einen gegebenen Motortyp definierte Werte sind.

7. Verfahren nach einem der Ansprüche 1 bis 6, **dadurch gekennzeichnet, dass** die Stromversorgung eine Batterie ist.

8. Vorrichtung zur Optimierung des Stromverbrauchs eines bürstenlosen Gleichstrommotors (103), der einen Stator und einen Rotor aufweist, wobei der Motor (103) dazu bestimmt ist, eine Last aufwärts und abwärts anzutreiben und von einer Stromversorgung versorgt wird, wobei die Vorrichtung in einem Controller des Motors enthalten ist und aufweist:

    - Einrichtungen zur Erkennung eines Befehls zum Indrehungversetzen des Motors,
    - Einrichtungen zur Messung der von der Stromversorgung gelieferten Spannung,

    **dadurch gekennzeichnet, dass** die Vorrichtung außerdem aufweist:

    - Einrichtungen zur Berechnung eines ersten und eines zweiten Geschwindigkeitssollwerts ausgehend von der Spannungsmessung, wobei der Wert des zweiten Geschwindigkeitssollwerts höher ist als der Wert des ersten Geschwindigkeitssollwerts,
    - Einrichtungen zur Erkennung, ob der Motor in einem Zustand ist, in dem die Last den Motor antreibt,
    - Einrichtungen zur Auswahl des ersten Geschwindigkeitssollwerts, wenn der Motor nicht in dem Zustand ist, in dem die Last den Motor antreibt,

- Einrichtungen zur Auswahl des zweiten Geschwindigkeitssollwerts, wenn der Motor in dem Zustand ist, in dem die Last den Motor antreibt.

9. Computerprogramm, das auf einem Träger gespeichert und/oder von einem Kommunikationsnetzwerk heruntergeladen werden kann, um von einem Prozessor gelesen zu werden, und **dadurch gekennzeichnet ist, dass** es Anweisungen enthält, um das Verfahren nach einem der Ansprüche 1 bis 6 zu implementieren, wenn das Programm vom Prozessor ausgeführt wird.

10. Datenspeicherträger, der ein Computerprogramm nach dem vorhergehenden Anspruch speichert.

**Claims**

1. Method for optimizing the electrical energy consumption of a brushless DC motor (103) comprising a stator and a rotor, the motor (103) being intended to drive a load (106) upward and downward and being powered by an electrical power supply, the method being executed by a controller of the motor and comprising the steps of:

    - detection (E30) of a command to make the motor rotate,
    - measurement (E31) of the voltage delivered by the electrical power supply,

    **characterized in that** the method further comprises the steps of:

    - calculation of a first (E32) speed setpoint and a second (E33) speed setpoint from the voltage measurement, the value of the second speed setpoint being greater than the value of the first speed setpoint,
    - detection (E35) of whether the motor is in a state in which the load drives the motor,
    - detection (E37) of the first speed setpoint if the motor is not in the state in which the load drives the motor,
    - selection (E36) of the second speed setpoint if the motor is in the state in which the load drives the motor.

2. Method according to Claim 1, **characterized in that** the detection of whether the motor is in a state in which the load drives the motor comprises the steps of:

    - determination of a real speed of the motor,

    - determination of whether the motor is in an acceleration phase (E41) or in a regulation phase (E43),
    - determination that the load drives the motor if the ratio of the real speed to a theoretical speed is greater than a first predetermined threshold (E42) when the motor is in an acceleration phase,
    - detection that the load drives the motor if the real speed is greater than a setpoint speed (E44) and if the ratio of a real average power supply voltage to a theoretical average power supply voltage is less than a second predetermined threshold (E45) when the motor is in a regulation phase.

3. Method according to Claim 1 or 2, **characterized in that**, when the load drives the motor, an angular offset equal to a predetermined initial angular value, the method further comprising, when the load drives the motor, steps of:

    - Determination (E503) of a speed deviation equal to the difference between a setpoint speed and the real speed,
    - Determination (E505) of a correction value equal to the speed deviation divided by a predetermined coefficient if the absolute value of the speed deviation is greater than a predetermined speed threshold (E504),
    - Application (E506) of a new angular offset calculated by adding the correction value to the preceding angular offset and limited in absolute value to a predetermined maximum angular value.

4. Method according to Claim 3, **characterized in that** the real speed is determined periodically with a period of predetermined duration and **in that** the method further comprises, when the load drives the motor:

    - storage (E507), for each determined real speed, of a value of the angular offset applied,
    - storage of each angular offset value applied in association with 14 previously stored values of the angular offsets applied so as to constitute a set of 15 values,
    - calculation (E508), for each set of 15 values, of an offset variation equal to the absolute value of the difference between the sum of the absolute values of the 5 oldest angular offsets of the set of the 15 values and the sum of the absolute values of the 5 most recent angular offsets of the set of the 15 values,
    - stopping (E511) of the application of an angular offset and determination that the motor between the load when the offset variation is greater than an end-of-driving threshold (E509).

**5.** Method according to Claim 4, **characterized in that** the end-of-driving threshold Sfe is equal to: *Sfe = rounded ($U_{nom}$ - $U_{mes}$)* + β, in which $U_{nom}$ is a value of a nominal voltage of the electrical power supply, $U_{mes}$ is a power supply voltage value measured previously on starting up the motor, and β is a predetermined angle.

**6.** Method according to one of Claims 1 to 5, **characterized in that** the first speed setpoint Vce and the second speed setpoint Vme are determined according to the following formulae:

Vce = $V_{nom}$*$U_{mes}$/$U_{nom}$ in which $V_{nom}$ is a predetermined speed when the electrical power supply voltage is equal to its nominal voltage $U_{nom}$,
Vme = Vce+a+b ($U_{nom}$ - $U_{mes}$) in which a and b are values defined for a given motor type.

**7.** Method according to any one of Claims 1 to 6, **characterized in that** the electrical power supply is a battery.

**8.** Device for optimizing the electrical energy consumption of a brushless DC motor (103) comprising a state and a rotor, the motor (103) being intended to drive a load upward and downward and being powered by an electrical power supply, the device being included in a controller of the motor and comprising:

- means for detecting a command to make the motor rotate,
- means for measuring the voltage delivered by the electrical power supply,

**characterized in that** the device further comprises:

- means for calculating a first speed setpoint and a second speed setpoint from the voltage measurement, the value of the second speed setpoint being greater than the value of the first speed setpoint,
- means for detecting whether the motor is in a state in which the load drives the motor,
- means for selecting the first speed setpoint if the motor is not in the state in which the load drives the motor,
- means for selecting the second speed setpoint if the motor is in the state in which the load drives the motor.

**9.** Computer program that can be stored on a medium and/or downloaded from a communication network, in order to be read by a processor, and **characterized in that** it comprises instructions for implementing the method according to one of Claims 1 to 6, when said program is run by the processor.

**10.** Information storage medium storing a computer program according to the preceding claim.

Fig. 1

Fig. 2

E30 — Détection demande démarrage moteur

E31 — Mesure tension batterie

E32 — Calcul de la consigne de vitesse quand moteur entraine charge

E33 — Calcul de la consigne de vitesse quand charge entraîne moteur

E34 — Démarrage moteur

E35 — charge mécanique entraîne moteur ?

O

N

E36 — Application consigne calculée à E33

E37 — Application consigne calculée à E32

Fig. 3

Fig. 4

```
┌─────────────────────────────────────────────┐
│              Mode ralentisseur               │──E500
└─────────────────────────────────────────────┘
                      │
                      ▼
┌─────────────────────────────────────────────┐
│        Appliquer décalage angulaire initial  │──E501
└─────────────────────────────────────────────┘
                      │
                      ▼
           ╱◇─────── E502 ◇╲
          ╱   Demande d'arrêt ?  ╲─────── oui
          ╲                      ╱
           ╲────────────────────╱
                      │ non
                      ▼
┌─────────────────────────────────────────────┐
│          erreur = v_r - U_mes                │──E503
└─────────────────────────────────────────────┘
                      │
                      ▼
           ╱◇─────── E504 ◇╲
          ╱  | Erreur | > seuil de  ╲──── non
          ╲       vitesse ?        ╱
           ╲──────────────────────╱
                      │ oui
                      ▼
┌─────────────────────────────────────────────┐
│    Déterminer nouveau décalage angulaire     │──E505
└─────────────────────────────────────────────┘
                      │
                      ▼
┌─────────────────────────────────────────────┐
│    Appliquer nouveau décalage angulaire      │──E506
└─────────────────────────────────────────────┘
                      │
                      ▼
┌─────────────────────────────────────────────┐
│       Enregistrer décalage angulaire         │──E507
└─────────────────────────────────────────────┘
                      │
                      ▼
┌─────────────────────────────────────────────┐
│       Déterminer variation de décalage       │──E508
└─────────────────────────────────────────────┘
                      │
                      ▼
           ╱◇─────── E509 ◇╲
   non ───╱   Variation de      ╲
          ╲  décalage > Sfe ?   ╱
           ╲──────────────────╱
                      │ oui
                      ▼
┌─────────────────────────────────────────────┐
│          Arrêt décalage angulaire            │──E510
└─────────────────────────────────────────────┘
                      │
                      ▼
┌─────────────────────────────────────────────┐
│           Mode charge entraînée              │──E511
└─────────────────────────────────────────────┘
```

Fig. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3104190 A1
- WO 2016177736 A1

- EP 1686683 A1